# EUROPEAN PATENT SPECIFICATION

(11) **EP 0 905 868 B1**
(45) Date of publication and mention of the grant of the patent: **26.03.2008**
(21) Application number: 97307701.9
(22) Date of filing: 30.09.1997
(51) Int. Cl.: H02K 23/40, H02K 1/14

(54) **A low armature reaction magnetic circuit structure for a DC electric machine**
Magnetische Kreisstruktur mit niedriger Ankerrückwirkung für eine Gleichstrommaschine
Circuit magnétique à faible réaction d'induit pour une machine électrique à courant continu

(43) Date of publication of application: 31.03.1999
(73) Proprietor: Yang, Tai-Her, Taipei (TW)
(72) Inventor: Yang, Tai-Her, Taipei (TW)
(74) Representative: Wright, Howard Hugh Burnby

(56) References cited:
- DE-A- 2 021 357
- PATENT ABSTRACTS OF JAPAN vol. 004, no. 175 (E-036), 3 December 1980 & JP 55 122466 A (HITACHI LTD;OTHERS: 01), 20 September 1980,

## Description

The invention relates to low reactivity magnetic circuit structures for a DC electric machine.

In a conventional electric machine at high speed operation status with low magnetic field strength, the increase of armature reacting cross magnetic flux causes offset to the field pole access which results in brush spark increase, lower commutating efficiency and abnormal overheating.

DE-A-20 21 357, and the equivalent US patent 3643118, discloses a rotary machine comprising a stator of having magnetic poles each provided with a stator of winding and an armature mounted for rotation within said stator and provided with an armature winding. Each of said magnetic poles is integrally formed at the end thereof with two oppositely directed polepieces which are aligned along the surface of said armature with a gap therebetween. The output capacity of the rotary machine is increased as the two polepieces are bisymmetrical so as to provide a larger sectional area of the magnetic path through a trailing one of said two polepieces in the rotating direction of the armature than that through a leading one of said two polepieces.

JA-A-55122466, as published in the Patent Abstracts of Japan, Vol. 4, No. 275, discloses a device that is intended to eliminate uneven distribution of magnetic-fluxes and to obtain a commutation machine having excellent commutation performance by providing a short circuit which suppresses the circumferential magnetic fluxes at the centre of the circumferential direction of a main pole, and suppressing the passage of armature-reaction fluxes. The apparatus is a commutating machine comprising a yoke and a main pole punched through a sheet of iron plate which also has slots for accommodating members which constitute the short circuit for armature-reaction suppression. These members are made of magnetic metals such as steel or non-magnetic metals such as copper or aluminium, and they are compressed or welded to the plate to form a closed loop by the end-surface in an axial direction of the stator core of the machine.

The present invention provides a low armature reaction magnetic circuit construction for a DC electric machine comprising: a rotor, the low armature reaction magnetic circuit construction comprising: a magnetic circuit housing within which the rotor is rotatable about a rotational axis extending longitudinally between the ends of the magnetic circuit housing, said housing including a plurality of magnetic circuit structures, said plurality of magnetic circuit structures magnetically interconnecting magnetic pole structures of different polarities to provide a magnetic flux path therebetween, characterised in that the cross-sectioned area, perpendicular to the longitudinal direction of said housing, of each of said magnetic circuit structures is: a) defined by an approximate average of magnetic flux density conducting through each magnetic circuit structure, and b) is arranged to increase gradually from the centre of the housing towards the longitudinal ends of the magnetic circuit housing so as to maintain a substantially uniform distribution of flux through said cross-sectional area; wherein at least one aperture, for increasing the magnetic resistance to the cross magnetic flux of the magnetic circuit, is formed in an outer periphery of said magnetic circuit structures between said magnetic pole structures.

Advantageously integrally constructing or assembling magnetic circuit structures in the same number of the magnetic poles to combine with the neighbouring poles to constitute magnetic field flux circuits of two or more poles, while under the condition of the interference-free field of magnetic circuit structure, and with the armature reacting cross magnetic flux of the DC machine being at high magnetic resistance status to inhibit the cross magnetic flux, improves the commutation effectiveness of the DC electric machine.

A number of preferred or advantageous features of the invention are referred to in the dependent claims.

Embodiments of the invention will now be described by way of example only in which:
Figure 1 is a 3D schematic diagram of an embodiment of the invention illustrating that the electrical machine magnetic circuit structure has an reducing outward through hole.
Figure 2 is the top down sectional view of figure 1.
Figure 3 is a 3D schematic diagram of the invention illustrating that each through hole is separately installed with a sheet type protective cover at the outside radial ring
Figure 4 is an embodying example of the electrical machine magnetic circuit structure in figure 1 with sunken inward blind hole.
Figure 5 is an embodying example of the electrical machine magnetic circuit structure with sunken outward blind hole.
Figure 6 is an embodying example of the electrical machine magnetic circuit structure with sunken-both side blind hole.
Figure 7 is a top down view of the first embodying example of the invention illustrating that the magnetic conductive end shell magnetic circuit is installed to constitute the interpole auxiliary distributing magnetic circuit.
Figure 8 is the front sectional view schematic diagram of figure 7.
Figure 9 is a top down view of the second embodying example of the invention illustrating that the magnetic conductive end shell magnetic circuit is installed to constitute the interpole auxiliary distributing magnetic circuit.
Figure 10 is the front sectional view schematic diagram of figure 9.
Figure 11 is a top down view of the third embodying example of the invention illustrating that the magnetic conductive end shell magnetic circuit is installed to constitute the interpole auxiliary distributing magnetic circuit.
Figure 12 is the front sectional view schematic diagram of figure 11.
Figure 13 is a top down view of the fourth embodying example of the invention illustrating that the magnetic conductive end shell magnetic circuit is installed to constitute the interpole auxiliary distributing magnetic circuit.
Figure 14 is the front sectional view schematic diagram of figure 13.
Figure 15 is a top down view of the fifth embodying example of the invention illustrating that the magnetic conductive end shell magnetic circuit is installed to constitute the interpole auxiliary distributing magnetic circuit.
Figure 16 is the front sectional view schematic diagram of figure 15.
Figure 17 is a top down view of the sixth embodying example of the invention illustrating that the magnetic conductive end shell magnetic circuit is installed to constitute the interpole auxiliary distributing magnetic circuit.
Figure 18 is the front sectional view schematic diagram of figure 17.
Figure 19 is a top down view of the embodying example illustrating that the magnetic conductive end shell magnetic circuits are installed to combine with the ring installed closed interpole magnetic circuits of the invention.
Figure 20 is the front sectional view schematic diagram of figure 19.
Figure 21 is a schematic diagram of the invention illustrating a linear field magnetic circuit structure.
Figure 22 is an embodying example of the invention illustrating that the gradually widened type magnetic circuit is constituted by the lamination of magnetic conducting sheets in the same diameter but with different widths of magnetic circuits.
Figure 23 is an embodying example of the invention illustrating that the magnetic conducting sheets in the same diameter but with different widths of magnetic circuits are axially accumulated to constitute the gradually widened field magnetic circuits along with the ring installation of interpole distributed magnetic circuits.

### DETAILED DESCRIPTION OF THE INVENTION

For the conventional electrical machine at the high speed operation status with lower field magnetic strength, the increase of armature reacting cross magnetic flux causes offset of the field pole axis which results in brush spark increase, lower commutating efficiency and abnormal overheating; thereof the low armature reacting magnetic circuit structure of the DC electrical machine is comprised of integrally constructed or assembled magnetic circuit structures in same as the number of the magnetic poles to combine with the neighbouring poles to constitute field magnetic flux circuits of two or more than two poles, while under the condition of interference-free field magnetic circuits structure, the armature reacting cross magnetic flux circuit of the DC machine is at high magnetic resistance status to inhibit the cross magnetic flux thereby to improve its commutation effectiveness as well as while maintaining the cross magnetic flux circuit at high resistance structure status, the interpole auxiliary distributed magnetic circuits and commutating poles are further installed, and in addition, both ends of the field magnetic pole can be selected as required to provide indent structure for easy ventilation and heat dissipation; whereof for easy explanation and delineation, the two-poles electrical machine structure is taken as an example to delineate the aforesaid function features of the various embodying types as following:

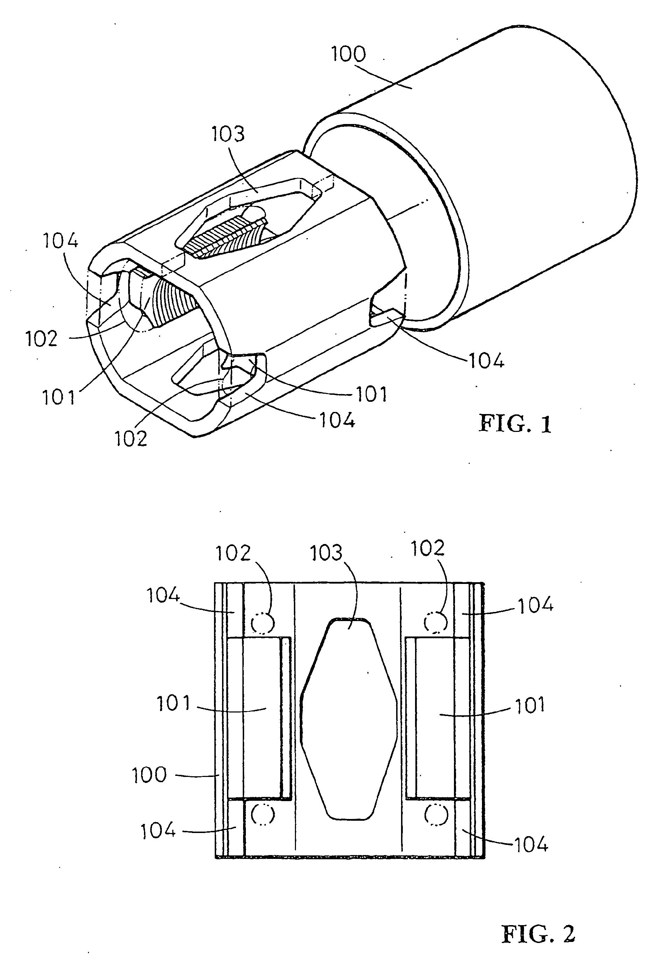

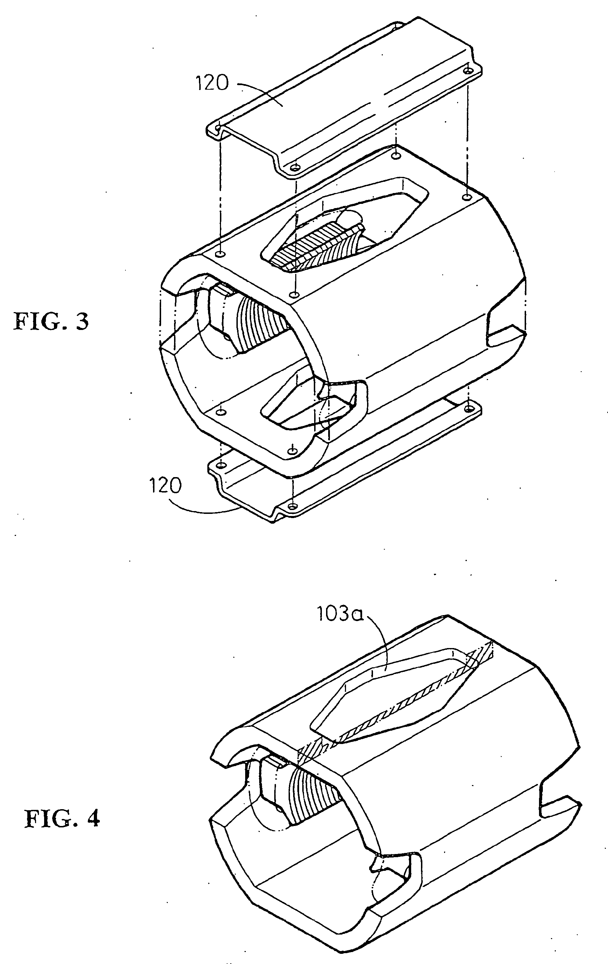

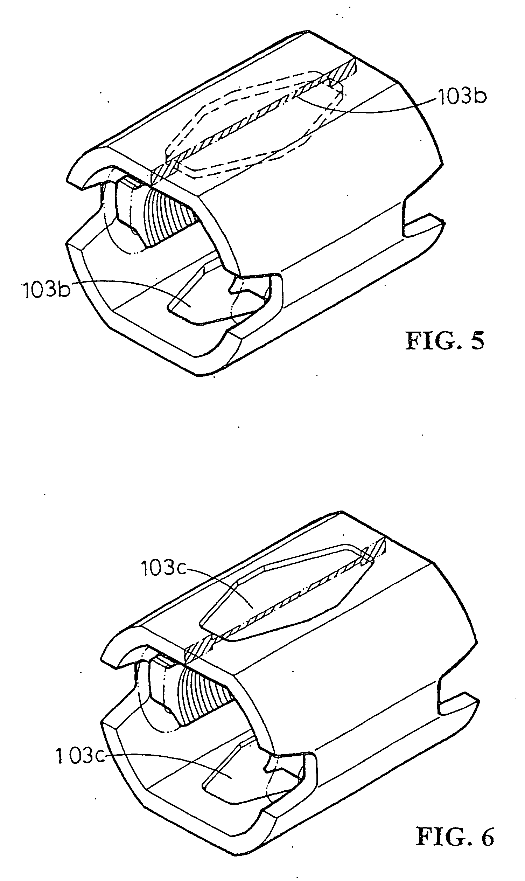

Figure 1 is a 3D schematic diagram of the embodying example of the invention illustrating that the electrical machine magnetic circuit structure has an reducing outward through hole. Figure 2 is the top down sectional view of figure 1. Figure 3 is a 3D schematic diagram of the invention illustrating that each through hole is separately installed with a sheet type protective cover at the outside radial ring. Figure 4 is an example embodiment of the electrical machine magnetical circuit structure shown in figure 1 with a sunken inward blind hole. Figure 5 is an example embodying electrical machine magnetic circuit structure having a sunken outward blind hole. Figure 6 is an example embodying the electrical machine magnetic circuit structure with two sunken blind holes, the blind holes being either side of the machine.

Generally, the embodiments of the invention as shown in these six figures are each a DC electric machine which generally comprises the following features. The DC electric machine has a low armature reaction magnetic circuit construction and the machine comprises a rotor (121) and a magnetic circuit housing within which the rotor (121) is rotatable about a rotational axis extending longitudinally between the ends of the magnetic circuit housing. The machine is constructed to incorporate the low armature magnetic circuit construction so that the magnetic circuit housing includes a plurality of magnetic circuit structures. All the magnetic circuit structures magnetically interconnect with the magnetic pole structures (101,102) which are of different pluralities to provide a magnetic flux path therebetween. Typically the pole structures (101,102) are permanent magnets or electrical coils wound around a magnetic iron core.

Embodiments of the invention are characterised in that the cross-sectional area of each interpole magnetic circuit structure (101,102) perpendicular to the longitudinal direction of the housing is defined by taking the average or the near average of the magnetic flux density conducted through each magnetic circuit structure. Also, this cross-sectional area of each interpole magnetic circuit structure (101,102) is arranged to gradually increase in each longitudinal direction along the pole axis from the centre of the magnetic circuit structure towards the longitudinal ends of the magnetic circuit housing so as to increase gradually from the centre of the housing towards the longitudinal ends of the magnetic circuit housing and so as to maintain a substantially uniform distribution of flux through the cross-sectional area. Furthermore, these embodiments are provided with at least one aperture (103,105,107,108,109), for increasing the magnetic resistance to the cross magnetic flux of the magnetic circuit. The or each aperture is formed in an outer periphery of the magnetic circuit structures between the magnetic pole structures (101,102). For example aperture (103) is shown in figures 1 to 3. Figure 3 shows aperture (103) as a through hole. Figure 4 shows aperture (103a) as a blind hole opening into the interior of the magnetic pole structure. Figure 5 shows aperture (103b) as a blind hole. Figure 6 shows aperture (103c) as a blind hole.

The outside of the magnetic circuit structure can be axially ring installed with protective covers made of magnetic conducting or non-conducting material, whereby an air passage between the protective cover and the magnetic circuit with through holes is formed to benefit the cooling air flow, whereof the aforesaid protective cover can be the magnetic conductive or non-conductive ring type protective cover as shown in figures 1-2, or can be assembled by the arc or plate type protective cover 102 and the magnetic circuit structures (as shown in figure 3), wherein the protective cover 102 of arc or plate type structures is individually and radially ring installed above the through hole or arranged to the location of its vent holes as required, thereof when the aforesaid ring shaped protective cover or the individual ring installed arc or sheet shaped protective covers are made of magnetic conductive material, it can be constituted to be part of the interpole magnetic circuit or the commutating pole magnetic circuit if commutating poles are further installed.

Besides, the near end shell section along each magnetic pole axis can be formed with the indent 104 as required, or the sunken inward or sunken outward or sunken both side blind holes in order to reduce weight and for easy heat dissipation, while the interpole magnetic circuits and the magnetic flux passing through each cross-section area of the magnetic circuit at the two ends are characterised to still maintain an uniform or near uniform distribution, or a good heat conductor can be installed onto the aforesaid indent, whereof each aforesaid indent can be an open or semi-close type or through a good heat conductor to dissipate accumulated heat, thereof the field magnetic poles and the magnetic circuits structure can be integrally formed or assembled by components, while the magnetic circuit structure itself can be integrally formed or assembled by components.

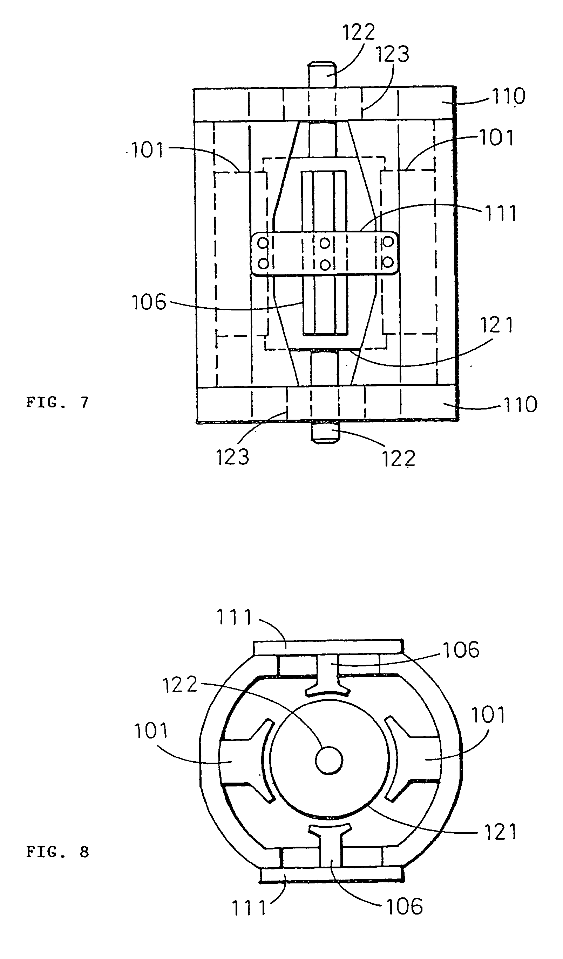

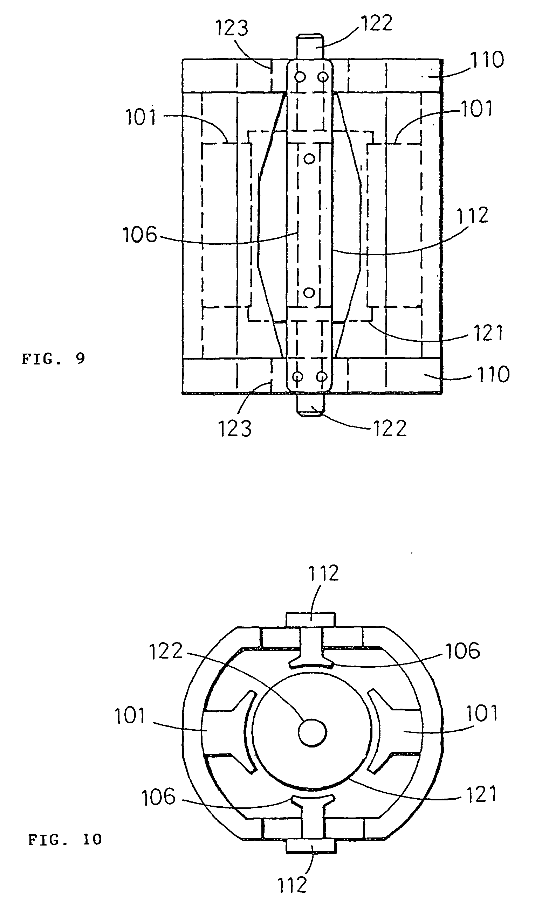

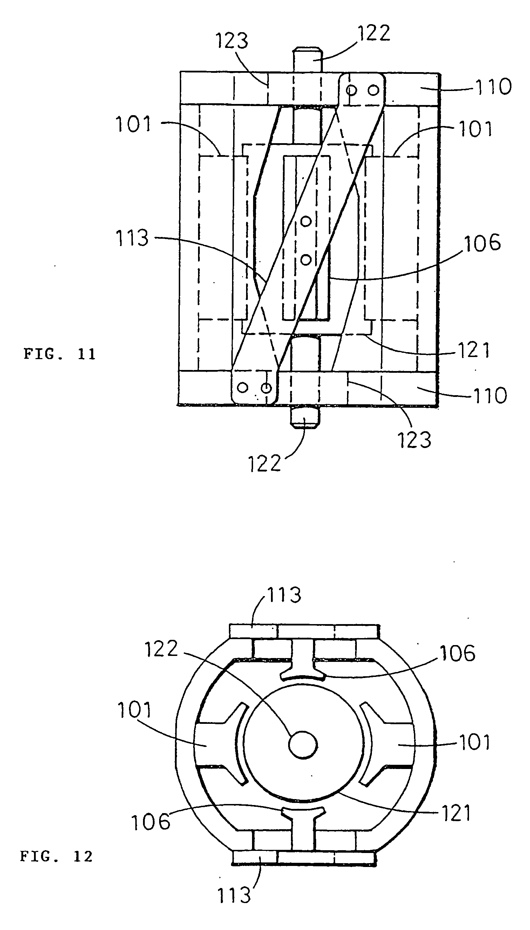

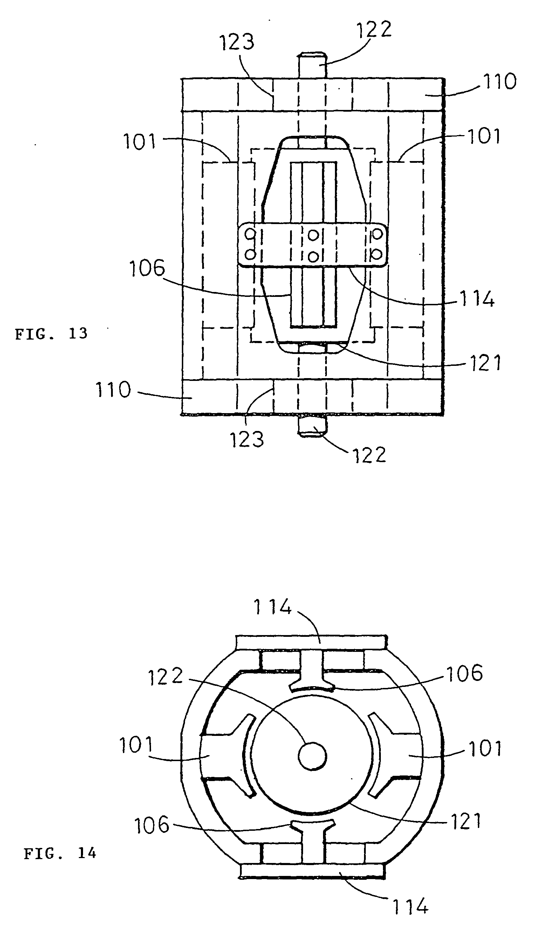

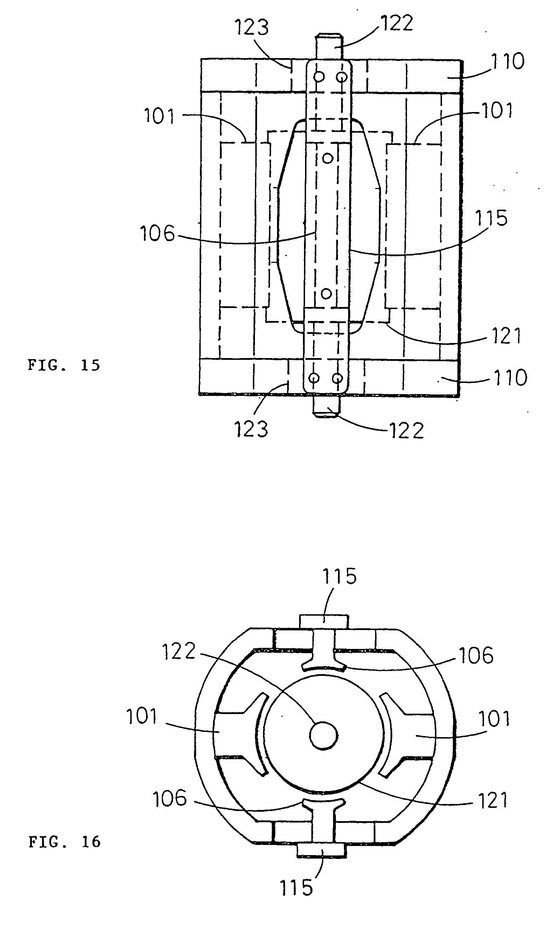

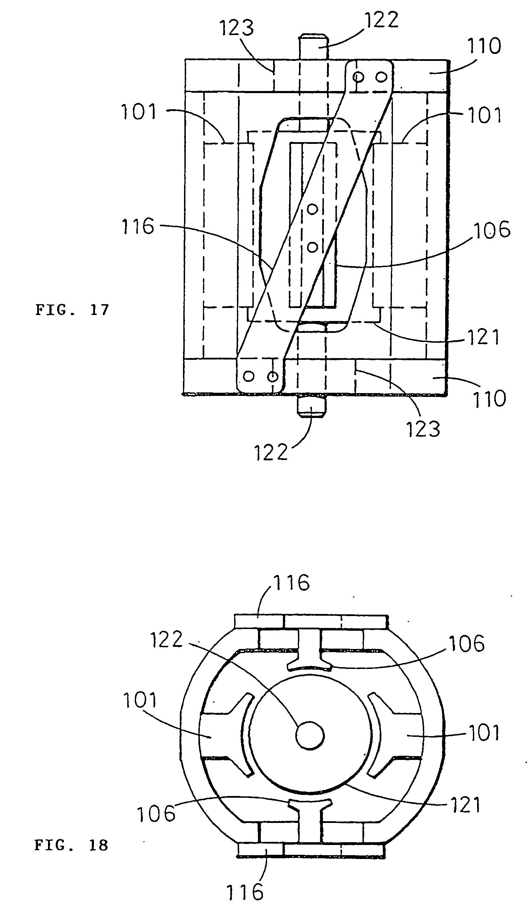

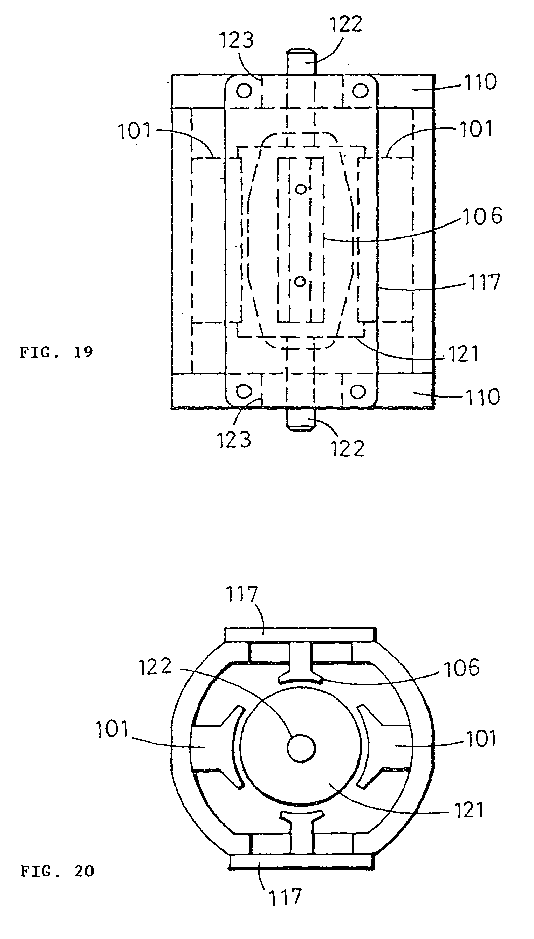

The low armature reacting magnetic circuit structure of the DC electrical machine as described in the aforesaid figures 1 - 3 can also have its magnetic circuit made into two or more than two separated structures and combine with the magnetic conductive end shell 110 to commonly constitute the field magnetic circuit, hereto for easy explanation and delineation, the two-parts magnetic circuit is taken as an example, whereof its combination methods include: (1) Figure 7 is a top down view of the first embodying example of the invention illustrating that the magnetic conductive end shell magnetic circuit is installed to constitute the interpole auxiliary distributing magnetic circuit, and figure 8 is the front sectional view schematic diagram of figure 7, therein the commutating poles 106 are installed at selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 111 are further ring installed between the commutating pole and the field pole, thereof the main field magnetic flux is through the field pole, the magnetic conductive end shell 110, the corresponding magnetic pole and the rotor to constitute a closed magnetic circuit, while the magnetic flux of the commutating pole 106 is through the auxiliary distributed magnetic circuit 111, magnetic conductive end shell 110 and corresponding magnetic pole to constitute a closed circuit; (2) Figure 9 is a top down view of the second embodying example of the invention illustrating that the magnetic conductive end shell magnetic circuit is installed to constitute the interpole auxiliary distributing magnetic circuit and figure 10'is the front sectional view schematic diagram of figure 9 therein the commutating poles 106 are installed at the selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 112 are further installed parallel to the rotor axis between the commutating pole and the field pole, thereof the main field magnetic flux is through the field pole, the magnetic conductive end shell 110, the corresponding magnetic pole and the rotor to constitute a closed magnetic circuit, while the magnetic flux of the commutating pole 106 is through the auxiliary distributed magnetic circuit 112, magnetic conductive end shell 110 and corresponding magnetic pole to constitute a closed circuit; (3) Figure 11 is a top down view of the third embodying example of the invention illustrating that the magnetic conductive end shell magnetic circuit is installed to constitute the interpole auxiliary distributing magnetic circuit and figure 12 is the front sectional view schematic diagram of figure 11; therein the commutating poles 106 are installed at the selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 113 are further installed in the same slanted direction or different slanted direction between the commutating pole and the field pole, thereof the main field magnetic flux is through the field pole, the magnetic conductive end shell 110, the corresponding magnetic pole and the rotor to constitute a closed magnetic circuit, while the magnetic flux of the commutating pole 106 is through the auxiliary distributed magnetic circuit 113, magnetic conductive end shell 110 and corresponding magnetic pole to constitute a closed circuit; thereof for avoiding the magnetic flux distribution through the rotating shaft, the isolating ring 123 made of non-magnetic conductive material can be installed between the magnetic conductive end shell 110 and the rotating shaft 122 of the rotor 121, or the electrical machine rotating shaft 122 can be made of non-magnetic conductive material;
- The low armature reacting magnetic circuit structure of the DC electrical machine as described in the aforesaid figures 1~3 can be further combined with the magnetic conductive end shell 110 to commonly constitute the field magnetic circuit, hereto for easy delineation, the two poles electrical machine is taken as an example, whereof its combination methods include: (1) Figure 13 is a top down view of the fourth embodying example of the invention illustrating that the magnetic conductive end shell magnetic circuit is installed to constitute the interpole auxiliary distributing magnetic circuit and figure 14 is the front sectional view schematic diagram of figure 13, therein the commutating poles 106 are installed at the selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 114 are further ring installed between the commutating pole and the field pole, thereof the main field magnetic flux is through the field pole, partially through the interpole magnetic circuit, partially through the magnetic conductive end shell 110 and then combined the flow to the corresponding magnetic pole, thereof the main field magnetic flux is through the field pole, partially through the interpole magnetic circuit, partially through the magnetic conductive end shell 110 and then combined the flow to the corresponding magnetic pole to constitute a closed magnetic circuit, while the magnetic flux of the commutating pole 106 is through the auxiliary distributed magnetic circuit 114, magnetic conductive end shell 110 and corresponding magnetic pole to constitute a closed circuit; (2) Figure 15 is a top down view of the fifth embodying example of the invention illustrating that the magnetic conductive end shell magnetic circuit is installed to constitute the interpole auxiliary distributing magnetic circuit and figure 16 is the front sectional view schematic diagram of figure 15 therein the commutating poles 106 are installed at the selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 112 are further installed parallel to the rotor axis between the commutating pole and the field pole, thereof the main field magnetic flux is through the field pole, partially through the interpole magnetic circuit, partially through the magnetic conductive end shell 110 and then combined the flow to the corresponding magnetic pole to constitute a closed magnetic circuit, while the magnetic flux of the commutating pole 106 is through the auxiliary distributed magnetic circuit 114, magnetic conductive end shell 110 and corresponding magnetic pole to constitute a closed circuit; (3) Figure 17 is a top down view of the sixth embodying example of the invention illustrating that the magnetic conductive end shell magnetic circuit is installed to constitute the interpole auxiliary distributing magnetic circuit and figure 18 is the front sectional view schematic diagram of figure 17; therein the commutating poles 106 are installed at the selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 116 are further installed in the same slanted direction or different slanted direction between the commutating pole and the field pole, therein the commutating poles 106 are installed at the selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 112 are further installed parallel to the rotor axis between the commutating pole and the field pole, thereof the main field magnetic flux is through the field pole, partially through the interpole magnetic circuit, partially through the magnetic conductive end shell 110 and then combined the flow to the corresponding magnetic pole to constitute a closed magnetic circuit, while the magnetic flux of the commutating pole 106 is through the auxiliary distributed magnetic circuit 114, magnetic conductive end shell 110 and corresponding magnetic pole to constitute a closed circuit; (4) Figure 19 is a top down view of the embodying example illustrating that the magnetic conductive end shell magnetic circuits are installed to combine with the ring installed closed interpole magnetic circuits of the invention and figure 20 is the front sectional view schematic diagram of figure 19, therein the commutating poles 106 are installed at the selected locations of the electrical angle difference according to the electrical machine performance at the hollow or blind holed magnetic circuit between the two neighboring magnetic poles with different polarities facing the rotor side, and one or more than one circuits of the auxiliary distributed magnetic circuits 116 are further installed, therein the commutating poles 106 and closed ring type magnetic circituit are installed at the selected locations of the electrical angle difference according to the electrical machine performance at the hollow or blind holed magnetic circuit between the two neighboring magnetic poles with different polarities facing the rotor side, wherein the magnetic conductive capacity is smaller than the magnetic flux of the main magnetic pole, thereof the main field magnetic flux is through the field pole, partially through the interpole magnetic circuit, partially through the magnetic conductive end shell 110 and then combined the flow to the corresponding magnetic pole to constitute a closed magnetic, circuit, while the magnetic flux of the commutating pole 106 is through the auxiliary distributed magnetic circuit 114, magnetic conductive end shell 110 and corresponding magnetic pole to constitute a closed circuit; thereof for avoiding the magnetic flux distribution through the rotating shaft, the isolating ring 123 made of non-magnetic conductive material can be installed between the magnetic conductive end shell 110 and the rotating shaft 122 of the rotor 121, or the electrical machine rotating shaft 122 can be made of non-magnetic conductive material.

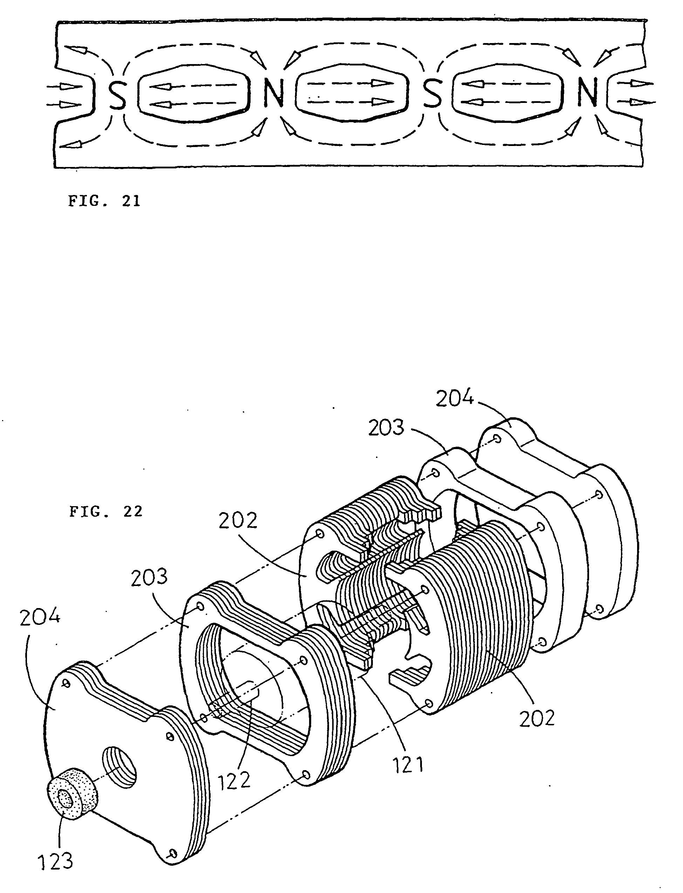

The aforesaid structures in figures 1-20 can be applied on the linear electrical machine structures, whereof their structure can be deemed as the extension of a multi-poles and large diameter rotational electrical machine; thereof figure 21 is a schematic diagram of the invention illustrating a linear field magnetic circuit structure, wherein as in the aforesaid applications, the interpole section can be provided with through holes or blind holes or longitudinal slots or slanted slots and be further installed with commutating poles.

Based on the aforesaid particular structure and operating characteristics, applications of the aforesaid electrical machine structure include the series excited, shunt excited or compound excited DC brushed motors or generators, or the DC brushless or brushed motors or generators with permanent magnet field and winding excited type commutating poles, wherein the commutating winding of the commutating pole is for series combination with the armature, whereof its field polarity relationship is determined according to the operating direction and its role functions as a motor or generator, in addition, its mechanical embodying types can further include the application range of the outside rotational or inside rotational type or double-acting type cylinder shaped or cone shaped or disk shaped rotational electrical structure with two or more than two poles based on the same principles of electrical machine characteristics or the linear driven electrical machines, whereby based on the aforesaid operating principles, the electrical machine magnetic circuits can be integrally formed or assembled by components or laminated by magnetic conductive material, or only the portion of magnetic poles are laminated by conductive material while the rest of magnetic circuits are in block shaped structures.

Figure 22 is an embodying example of the invention illustrating that the gradually widened type magnetic circuit is constituted by the lamination of magnetic conducting sheets in the same diameter but with different widths of magnetic circuits, wherein it is characterized in the following:
- A gradually widened type magnetic circuit 202: The magnetic circuits with gradually increased cross-section area toward the end shells along the axial direction in the same diameter but with different widths of magnetic circuits are constituted by magnetic conductive sheets,
wherein the sheets have the same diameter but their field magnetic circuits are laminated by different widths of magnetic circuits from center of magnetic pole toward the two ends in axial direction, thereof the magnetic conductive sheet is wider as it is more close to the end shell 204, thereby to cause the magnetic flux of the field magnetic circuit approach uniform.

The said field magnetic circuits in figure 22 can also be constituted by combined structures, i.e. constituted by the magnetic conductive sheets in different diameters and different widths of magnetic circuits, thereby to make the magnetic conducting area gradually increased from center of magnetic pole toward the two end shell in axial direction to cause the magnetic flux of the field magnetic circuit approach uniform; besides, as the electrical machine structure requires a closed magnetic circuit, the two axial ends of the field magnetic circuit in figure 22 can be optionally matched with corresponding magnetic circuit structures, wherein their matching methods include the following:
- An intermediate magnetic circuit 203: It is for coupling with the two ends of the field magnetic circuit thereby to let the interpole magnetic flux constitute a closed magnetic flux through the field magnetic circuit, intermediate magnetic circuit, rotor for electrical machine effect operation, wherein the intermediate magnetic circuit is constituted by magnetic conductive sheets to present a closed ring type interpole magnetic circuit at the middle location between the corresponding neighboring poles for coupling with the magnetic flux between the neighboring poles of the field magnetic circuit, whereof the intermediate magnetic circuit can also be constituted by block shaped magnetic conductive material;
- An end shell 204: The end shell is combined with the rotor 121 and field magnetic circuit structure (or the series installed intermediate magnetic circuits between the two) to constitute a mechanical structure to provide the mechanical stability basis for the electrical machine operation, wherein the end shell can be a magnetic conductive or non-magnetic conductive body, thereof if the end shell is of a magnetic conductive construction, a non-magnetic conducting isolating ring 123 is required to be installed between itself and the rotating shaft 122 to avoid magnetic flux circulation formation through the rotating shaft when the rotating shaft is a magnetic conductive body, wherein if the rotating shaft is a non-magnetic. conductive body, the non-magnetic conducting isolating ring can be omitted; thereof if the end shell surface is constituted by non-magnetic conductive material, then the intermediate magnetic circuit 203 is required, and if the end shell surface is constituted by magnetic conductive material, then the intermediate magnetic circuit can be optionally installed as required or not installed, thereof if the intermediate magnetic circuit is not installed, the end shell can be part of the magnetic circuit, whereof the magnetic conductive end shell structure can be constituted by block shaped material or magnetic conductive sheets;
- A protective cover: As the section between the center of pole and neighboring poles of the said electrical machine in figure 22 is in open structure, the ring shaped protective cover can be installed axially or combined with individual arc shaped or sheet shaped protective covers as in the embodying examples described in figures 1~3, whereof the protective cover can be made of non-magnetic conductive material to let the electrical machine appear a closed type, or also have a open flow circuit to match with the flow circuit hole (or indent) of the intermediate magnetic circuit or end shell to constitute a semi-closed structure with axial cooling flow circuits; thereof if the protective cover is constituted by magnetic conductive material, besides of the above said functions, it can also be constituted to be the distributed magnetic circuit and to further install with commutating magnetic pole as required or directly constituted to be the commutating pole.

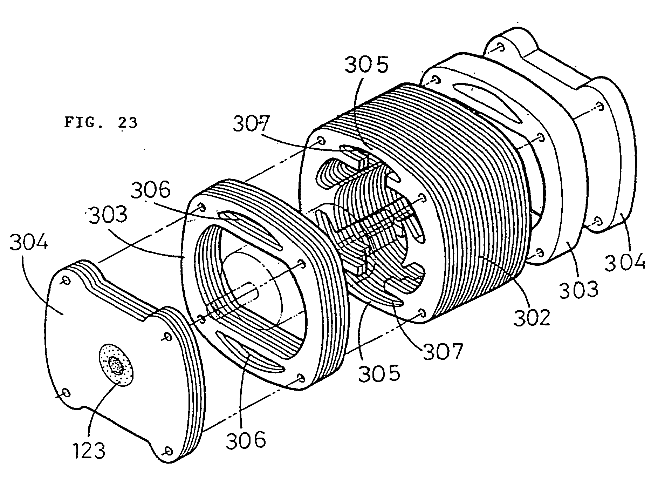

Figure 23 is an embodying example of the invention illustrating that the magnetic conducting sheets in the same diameter but with different widths of magnetic circuits are axially accumulated to constitute the gradually widened field magnetic circuits along with the ring installation of interpole distributed magnetic circuits, wherein it is characterized in the following:
- A gradually widened type magnetic circuit 302: The magnetic circuits with gradually increased cross-section area toward the end shells along the axial direction in the same diameter but with different widths of magnetic circuits are constituted by magnetic conductive sheets, wherein the sheets have the same diameter but their field magnetic circuits are laminated by different widths of magnetic circuits from center of magnetic pole toward the two ends in axial direction, thereof the magnetic conductive sheet is wider as it is more close to the end shell 304, thereby to cause the magnetic flux of the field magnetic circuit approach uniform; wherein it is characterized that each magnetic conductive sheet has a distributed magnetic circuit 305 ring installed between the neighboring magnetic poles simultaneously for match with the flow circuit hole 306 of the intermediate magnetic circuit 303 at its two ends, whereby to allow the electrical machine appear closed radially while have cooling flow circuit hole axially.

The said field magnetic circuits in figure 23 can also be constituted by combined structures, i.e. constituted by the magnetic conductive sheets in different diameters and different widths of magnetic circuits, thereby to make the magnetic conducting area gradually increased from center of magnetic pole toward the two end shell in axial direction to cause the magnetic flux of the field magnetic circuit approach uniform; besides, as the electrical machine structure requires a closed magnetic circuit, the two axial ends of the field magnetic circuit in figure 23 can be optionally matched with corresponding magnetic circuit structures, wherein their matching methods include the following:
- An intermediate magnetic circuit 303: It is for coupling with the two ends of the field magnetic circuit thereby to let the interpole magnetic flux constitute a closed magnetic flux through the field magnetic circuit, intermediate magnetic circuit, rotor for electrical machine effect operation, wherein the intermediate magnetic circuit is constituted by magnetic conductive sheets to present a closed ring type interpole magnetic circuit at the middle location between the corresponding neighboring poles for coupling with the magnetic flux between the neighboring poles of the field magnetic circuit, whereof the intermediate magnetic circuit can also be constituted by block shaped magnetic conductive material; wherein it is characterized that the interpole magnetic circuits at the center location of corresponding magnetic poles of the intermediate magnetic circuit have flow circuit holes 306 (or indents) to commonly combine with the flow circuit space 307 of the field magnetic circuit, whereby to allow the electrical machine appear closed radially while have cooling flow circuit hole axially.
- An end shell 304: The end shell is combined with the rotor 121 and field magnetic circuit structure (or the series installed intermediate magnetic circuits between the two) to constitute a mechanical structure to provide the mechanical stability basis for the electrical machine operation, wherein the end shell can be a magnetic conductive or non-magnetic conductive body, thereof if the end shell is of a magnetic conductive construction, a non-magnetic conducting isolating ring 123 is required to be installed between itself and the rotating shaft 122 to avoid magnetic flux circulation formation through the rotating shaft when the rotating shaft is a magnetic conductive body, wherein if the rotating shaft is a non-magnetic conductive body, the non-magnetic conducting isolating ring can be omitted; thereof if the end shell is constituted by non-magnetic conductive material, then the intermediate magnetic circuit can be optionally installed as required or not installed, thereof if the intermediate magnetic circuit is not installed, the end shell can be part of the magnetic circuit, whereof the magnetic conductive end shell structure can be constituted by block shaped material or magnetic conductive sheets;
For the low armature reacting magnetic circuit structure of the DC electrical machine. wherein if required by the structure, its magnetic circuit structure of the gradual increased magnetic conducting cross-section area can be changed from gradually increase toward the two ends in axial direction to gradually increase in single direction from one end to the other end, whereof its structural principle is to let the magnetic flux at each section location of the field magnetic circuit to approach uniform.

Due to the particular structural properties of the air passages, the cooling methods of the low armature reacting magnetic circuit structure of the DC electrical machine are the following:
1) Open type free air cooling, i.e. without outside ring protective cover, or semi-open type free air cooling or closed type;
2) Air cooling by internally installed air fan or externally installed independently driven air fan;
3) Fluid cooling by externally installed fluid pumps and radiators or heat pipes to dissipate heat;

As summarized from the above descriptions, the innovative design of the low armature reacting magnetic circuit structure of the DC electrical machine has disclosed a technical idea of an innovated structure which has definite effectiveness.

## Claims

1. A low armature reaction magnetic circuit construction for a DC electric machine comprising:
a rotor (121), the low armature reaction magnetic circuit construction comprising:
a magnetic circuit housing within which the rotor (121) is rotatable about a rotational axis extending longitudinally between the ends of the magnetic circuit housing, said housing including a plurality of magnetic circuit structures, said plurality of magnetic circuit structures magnetically interconnecting magnetic pole structures (101, 102) of different polarities to provide a magnetic flux path therebetween,
**characterised in that** the cross-sectional area, perpendicular to the longitudinal direction of said housing, of each of said magnetic circuit structures is:
a) defined by an approximate average of magnetic flux density conducting through each magnetic circuit structure, and
b) is arranged to increase gradually from the centre of the housing towards the longitudinal ends of the magnetic circuit housing so as to maintain a substantially uniform distribution of flux through said cross-sectional area;
wherein at least one aperture (103, 105, 107, 108, 109), for increasing the magnetic resistance to the cross magnetic flux of the magnetic circuit, is formed in an outer periphery of said magnetic circuit structures between said magnetic pole structures (101, 102).

2. A magnetic circuit structure as claimed in claim 1, wherein each of said magnetic pole structures is a permanent magnet.

3. A magnetic circuit structure as claimed in claim 1, wherein each of said magnetic pole structures is an excited winding iron core (101).

4. A magnetic circuit structure as claimed in any one of claims 1 to 3, wherein each said aperture (103) is a through-hole.

5. A magnetic circuit structure as claimed in any one of claims 1 to 4, wherein each said aperture (103) is elongated, has a maximum central transverse dimension, defined to be perpendicular to the said longitudinal dimension and is defined by side edges tapering towards opposed end walls, said walls being shorter than said central transverse dimension.

6. A magnetic circuit structure as claimed in any one of claims 1 to 3, wherein each of said plurality of apertures (103, 105, 107, 108, 109) is a blind hole opening into an interior of the magnetic circuit housing.

7. A magnetic circuit structure as claimed in any one of claims 1 to 3, wherein each of said plurality of apertures (103, 105, 107, 108, 109) is a blind hole opening into an exterior of the magnetic circuit housing.

8. A magnetic circuit structure as claimed in any one of claims 1 to 3, wherein each of said plurality of apertures (103, 105, 107, 108, 109) is a blind hole opening into an interior and opening into an exterior of the magnetic circuit housing.

9. A magnetic circuit structure as claimed in any one of claims 1 to 8, wherein each of said plurality of apertures (103, 105, 107, 108, 109) is a longitudinal slot arranged parallel to said magnetic field axis.

10. A magnetic circuit structure as claimed in any one of claims 1 to 8, wherein each of said plurality of apertures (103, 105, 107, 108, 109) is a longitudinal slot arranged to be slanted toward said magnetic field axis.

11. A magnetic circuit structure as claimed in any one of claims 1 to 8, wherein each of said plurality of apertures (103, 105, 107, 108, 109) is a lateral slot arranged to be perpendicular to the magnetic field axis.

12. A magnetic circuit structure as claimed in any one of claims 1 to 8, wherein each of said plurality of apertures (103, 105, 107, 108, 109) is a round aperture.

13. A magnetic circuit structure as claimed in any one of claims 1 to 8, wherein each of said plurality of apertures (103, 105, 107, 108, 109) is a combination selected from the group consisting of round apertures, apertures slotted perpendicular to the magnetic field axis, and apertures slanted toward the magnetic field axis.

14. A magnetic circuit structure as claimed in any one of claims 1 to 13, further comprising a plurality of protective covers (120) mounted on the outer periphery of the magnetic housing so that each of said plurality of protective covers covers an associated aperture (103, 105, 107, 108, 109), wherein the protective covers (120) are made of magnetic conducting material, and wherein air passages are formed between the protective covers and the magnetic housing to provide cooling air flow.

15. A magnetic circuit structure as claimed in any one of claims 1 to 13, further comprising a plurality of protective covers (120) mounted on the outer periphery of the magnetic housing so that each of said plurality of protective covers (120) covers an associated aperture (103, 105, 107, 108, 109), wherein the protective covers (120) are made of non-magnetic conducting material, and wherein air passages are formed between the protective covers and the magnetic housing to provide cooling air flow.

16. A magnetic circuit structure as claimed in any one of the preceding claims, further comprising a protective cover (120) arranged entirely to cover said magnetic circuit housing including all said apertures (103, 105, 107, 108, 109), said protective cover being made of non-magnetic conducting material and being spaced from said magnetic circuit housing to provide cooling air flow.

17. A magnetic circuit structure as claimed in claim 14, wherein said magnetic circuit housing further comprises:
two end shell sections, each of said two end shell sections corresponding to a respective magnetic field pole;
said end shell sections and said magnetic circuit structures having a shape arranged to maintain approximately uniform distribution of magnetic flux through said magnetic circuit structure cross-sectional area;
said each section having a plurality of indents (104); and
said indents (104) including a high-efficiency heat conductor.

18. A magnetic circuit structure as claimed in claim 17, wherein said indents (104) are partially open.

19. A magnetic circuit structure as claimed in claim 17, wherein said magnetic circuit housing further comprises:
a plurality of interpole auxiliary distributing magnetic circuit components,
wherein said housing sections are combined at at least one of said interpole auxiliary distributing magnetic circuit components so as to form magnetic circuits connecting magnetic field poles of said DC electric machine.

20. A magnetic circuit structure as claimed in claim 19, wherein said interpole auxiliary distributing magnetic circuit component is a lateral strap.

21. A magnetic circuit structure as claimed in claim 19, wherein said interpole auxiliary distributing magnetic circuit component is an axial strap.

22. A magnetic circuit structure as claimed in claim 19, wherein said interpole auxiliary distributing magnetic circuit component is a diagonal strap.

23. A magnetic circuit structure as claimed in claim 19, wherein said structure is a linear electric machine structure, wherein said structure is an extension of a multi-pole and large diameter rotational device.

## Patentansprüche

1. Magnetkreis-Struktur mit schwacher Ankerrückwirkung für eine elektrische Gleichstrommaschine mit:
einem Rotor (121), wobei die Magnetkreis-Struktur schwacher Ankerrückwirkung aufweist:
ein Magnetkreisgehäuse, in dem der Rotor (121) um eine zwischen den Enden des Magnetkreisgehäuses in Längsrichtung verlaufende Drehachse drehbar gelagert ist, wobei das Gehäuse eine Vielzahl von Magnetkreis-Strukturen aufweist, die Magnetpolstrukturen (101, 102) unterschiedlicher Polung magnetisch miteinander verbinden, um einen magnetischen Flussweg zwischen ihnen anzulegen;
**dadurch gekennzeichnet, dass** die Querschnittsfläche rechtwinklig zur Längsrichtung des Gehäuses jeder der Magnetkreis-Strukturen:
a. näherungsweise vom Durchschnitt der magnetischen Flussdichte definiert ist, die in jeder Magnetkreis-Struktur herrscht, und
b. so angeordnet ist, dass sie von der Gehäusemitte zu den Längsenden des Magnetkreisgehäuses allmählich zunimmt, um über die genannte Querschnittsfläche eine im wesentlichen gleichmäßige Flussverteilung aufrecht zu erhalten;
wobei im äußeren Umfang der Magnetkreis-Strukturen zwischen den Magnetpolstrukturen (101, 102) mindestens eine Öffnung (103, 105, 107, 108, 109) ausgebildet ist, um den magnetischen Widerstand des Magnetkreises gegen den magnetischen Querfluss zu erhöhen.

2. Magnetkreis-Struktur nach Anspruch 1, bei der es sich bei den Magnetpolstrukturen jeweils um Permanentmagneten handelt.

3. Magnetkreis-Struktur nach Anspruch 1, bei der es sich bei den Magnetpolstrukturen jeweils um einen Eisenkern (101) mit einer Erregerwicklung handelt.

4. Magnetkreis-Struktur nach einem der Ansprüche 1 bis 3, bei der es sich bei den Öffnungen (103) jeweils um eine Durchgangsöffnung handelt.

5. Magnetkreis-Struktur nach einem der Ansprüche 1 bis 4, bei der die Öffnungen (103) jeweils langgestreckt sind, in der Mitte eine maximale Querabmessung rechtwinklig zur Längsabmessung haben und von Seitenkanten definiert sind, die sich zu den entgegengesetzt gewandten Endwänden verjüngen, wobei die Wände kürzer sind als die mittige Querabmessung.

6. Magnetkreis-Struktur nach einem der Ansprüche 1 bis 3, bei der die Öffnungen (103, 105, 107, 108, 109) jeweils eine Vertiefung sind, die zum Inneren des Magnetkreisgehäuses hin offen ist.

7. Magnetkreis-Struktur nach einem der Ansprüche 1 bis 3, bei der die Öffnungen (103, 105, 107, 108, 109) jeweils eine Vertiefung sind, die zum Äußeren des Magnetkreisgehäuses hin offen ist.

8. Magnetkreis-Struktur nach einem der Ansprüche 1 bis 3, bei der die Öffnungen (103, 105, 107, 108, 109) jeweils Vertiefungen sind, die zum Inneren und zum Äußeren des Magnetkreisgehäuses hin offen sind.

9. Magnetkreis-Struktur nach einem der Ansprüche 1 bis 8, bei der die Öffnungen (103, 105, 107, 108, 109) jeweils ein Längsschlitz sind, der parallel zur Magnetfeldachse verläuft.

10. Magnetkreis-Struktur nach einem der Ansprüche 1 bis 8, bei der die Öffnungen (103, 105, 107, 108, 109) jeweils ein Längsschlitz sind, der schräg zur Magnetfeldachse hin verläuft.

11. Magnetkreis-Struktur nach einem der Ansprüche 1 bis 8, bei der die Öffnungen (103, 105, 107, 108, 109) jeweils ein seitlicher Schlitz sind, der rechtwinklig zur Magnetfeldachse verläuft.

12. Magnetkreis-Struktur nach einem der Ansprüche 1 bis 8, bei der die Öffnungen (103, 105, 107, 108, 109) jeweils rund sind.

13. Magnetkreis-Struktur nach einem der Ansprüche 1 bis 8, bei der die Öffnungen (103, 105, 107, 108, 109) jeweils eine Kombination sind, die aus der Gruppe runde Öffnungen, zur Magnetfeldachse rechtwinklige Schlitze und zur Magnetfeldachse schräg verlaufende Öffnungen gewählt ist.

14. Magnetkreis-Struktur nach einem der Ansprüche 1 bis 13 weiterhin mit Schutzabdeckungen (120), die auf das Magnetkreisgehäuse außen so aufgesetzt sind, dass sie jeweils eine zugehörige Öffnung (103, 105, 107, 108, 109) abdecken, wobei die Schutzabdeckungen (120) aus magnetisch leitfähigem Werkstoff bestehen und zwischen ihnen und dem Magnetkreisgehäuse jeweils Luftdurchlässe belassen sind, die einen Kühlluftstrom ermöglichen.

15. Magnetkreis-Struktur nach einem der Ansprüche 1 bis 13 weiterhin mit Schutzabdeckungen (120), die auf das Magnetgehäuse außen so aufgesetzt sind, dass sie jeweils eine zugehörige Öffnung (103, 105, 107, 108, 109) abdecken, wobei die Schutzabdeckungen (120) aus magnetisch nicht leitfähigem Werkstoff bestehen und zwischen ihnen und dem Magnetkreisgehäuse jeweils Luftdurchlässe belassen sind, die einen Kühlluftstrom ermöglichen.

16. Magnetkreis-Struktur nach einem der vorgehenden Ansprüche weiterhin mit einer Schutzabdeckung (120), die das Magnetkreisgehäuse einschließlich aller Öffnung (103, 105, 107, 108, 109) vollständig abdeckt, aus einem magnetisch nicht leitfähigen Werkstoff hergestellt und vom Magnetkreisgehäuse beabstandet ist, um eine Kühlluftströmung zu ermöglichen.

17. Magnetkreis-Struktur nach Anspruch 14, bei der das Magnetkreisgehäuse weiterhin aufweist:
zwei End-Schalenabschnitte, die jeweils einem zugehörigen Magnetfeldpol entsprechen;
wobei die End-Schalenabschnitte und die Magnetkreis-Strukturen eine solche Gestalt aufweisen, dass die Verteilung des magnetischen Flusses über die Querschnittsfläche der Magnetkreis-Strukturangenähert gleichmäßig bleibt;
die Abschnitte jeweils Einschnitte (104) enthalten; und
die Einschnitte (104) einen hoch wirksamen Wärmeleiter enthalten.

18. Magnetkreis-Struktur nach Anspruch 17, bei der die Einschnitte (104) teilweise offen sind.

19. Magnetkreis-Struktur nach Anspruch 17, bei der das Magnetkreisgehäuse weiterhin aufweist:
eine Vielzahl von Wendepol-Magnetkreisteilen zur hilfsweisen Flussverteilung, wobei die Gehäuseabschnitte an mindestens einem der Wendepol-Magnetkreisteile so zusammengeführt sind, dass magnetkreisverbindende Magnetfeldpole der elektrischen GS-Maschine entstehen.

20. Magnetkreis-Struktur nach Anspruch 19, bei der der Wendepol-Magnetkreisteil zur hilfsweisen Flussverteilung ein seitliches Band ist.

21. Magnetkreis-Struktur nach Anspruch 19, bei der der Wendepol-Magnetkreisteil zur hilfsweisen Flussverteilung ein axiales Band ist.

22. Magnetkreis-Struktur nach Anspruch 19, bei der der Wendepol-Magnetkreisteil zur hilfsweisen Flussverteilung ein diagonales Band ist.

23. Magnetkreis-Struktur nach Anspruch 19, die eine elektrische Linearmaschine darstellt und eine Erstreckung einer mehrpoligen Rotationsvorrichtung großen Durchmessers ist.

## Revendications

1. Construction de circuit magnétique à faible réactivité d'induit, destinée à une machine électrique en courant continu, comprenant :
un rotor (121), la construction de circuit magnétique à faible réactivité d'induit comprenant :
un boîtier de circuit magnétique dans lequel le rotor (121) peut tourner autour d'un axe de rotation qui s'étend longitudinalement entre les extrémités du boîtier de circuit magnétique, le boîtier comprenant plusieurs structures de circuit magnétique, les structures de circuit magnétique interconnectant magnétiquement des structures de pôle magnétique (101, 102) de polarités différentes pour la formation d'un trajet de flux magnétique entre elles,
**caractérisée en ce que** la section, perpendiculaire à la direction longitudinale du boîtier, de chacune des structures de circuit magnétique :
a) est définie par une moyenne approximative de la densité de flux magnétique conduite dans chaque structure de circuit magnétique, et
b) est destinée à augmenter progressivement depuis le centre du boîtier vers les extrémités longitudinales du boîtier de circuit magnétique afin qu'une distribution sensiblement uniforme du flux soit maintenue dans la section,
dans laquelle une ouverture au moins (103, 105, 107, 108, 109), destinée à augmenter la résistance magnétique au flux magnétique transversal du circuit magnétique, est formée dans une périphérie externe des structures de circuit magnétique entre les structures de pôle magnétique (101, 102).

2. Structure de circuit magnétique selon la revendication 1, dans laquelle chacune des structures de pôle magnétique est un aimant permanent.

3. Structure de circuit magnétique selon la revendication 1, dans laquelle chacune des structures de pôle magnétique est un noyau excité de fer à enroulement (101).

4. Structure de circuit magnétique selon l'une quelconque des revendications 1 à 3, dans laquelle l'ouverture (103) est un trou débouchant.

5. Structure de circuit magnétique selon l'une quelconque des revendications 1 à 4, dans laquelle l'ouverture (103) est allongée, elle a une dimension transversale centrale maximale déterminée comme étant perpendiculaire à la dimension longitudinale et est délimitée par des bords latéraux s'inclinant vers les parois opposées d'extrémité, les parois étant plus courtes que la dimension transversale centrale.

6. Structure de circuit magnétique selon l'une quelconque des revendications 1 à 3, dans laquelle chacune des ouvertures (103, 105, 107, 108, 109) est un trou borgne débouchant à l'intérieur du boîtier de circuit magnétique.

7. Structure de circuit magnétique selon l'une quelconque des revendications 1 à 3, dans laquelle chacune des ouvertures (103, 105, 107, 108, 109) est un trou borgne débouchant à l'extérieur du boîtier de circuit magnétique.

8. Structure de circuit magnétique selon l'une quelconque des revendications 1 à 3, dans laquelle chacune des ouvertures (103, 105, 107, 108, 109) est un trou borgne débouchant à l'intérieur et à l'extérieur vers l'extérieur du boîtier de circuit magnétique.

9. Structure de circuit magnétique selon l'une quelconque des revendications 1 à 8, dans laquelle chacune des ouvertures (103, 105, 107, 108, 109) est une fente longitudinale parallèle à l'axe du champ magnétique.

10. Structure de circuit magnétique selon l'une quelconque des revendications 1 à 8, dans laquelle chacune des ouvertures (103, 105, 107, 108, 109) est une fente longitudinale destinée à être inclinée vers l'axe du champ magnétique.

11. Structure de circuit magnétique selon l'une quelconque des revendications 1 à 8, dans laquelle chacune des ouvertures (103, 105, 107, 108, 109) est une fente latérale destinée à être perpendiculaire à l'axe du champ magnétique.

12. Structure de circuit magnétique selon l'une quelconque des revendications 1 à 8, dans laquelle chacune des ouvertures (103, 105, 107, 108, 109) est une ouverture circulaire.

13. Structure de circuit magnétique selon l'une quelconque des revendications 1 à 8, dans laquelle chacune des ouvertures (103, 105, 107, 108, 109) est une combinaison choisie dans le groupe constitué par des ouvertures circulaires, des ouvertures fendues perpendiculairement à l'axe du champ magnétique et des ouvertures inclinées vers l'axe du champ magnétique.

14. Structure de circuit magnétique selon l'une quelconque des revendications 1 à 13, comprenant en outre plusieurs couvercles protecteurs (120) montés à la périphérie externe du boîtier magnétique de manière que chacun des couvercles protecteurs recouvre une ouverture associée (103, 105, 107, 108, 109), dans laquelle les couvercles protecteurs (120) sont formés d'un matériau conducteur magnétique, et dans laquelle des passages d'air sont formés entre les couvercles protecteurs et le boîtier magnétique, pour la formation d'un courant d'air de refroidissement.

15. Structure de circuit magnétique selon l'une quelconque des revendications 1 à 13, comprenant en outre plusieurs couvercles protecteurs (120) montés à la périphérie externe du boîtier magnétique de manière que chacun des couvercles protecteurs recouvre une ouverture associée (103, 105, 107, 108, 109), dans laquelle les couvercles protecteurs (120) sont formés d'un matériau non conducteur magnétique, et dans laquelle des passages d'air sont formés entre les couvercles protecteurs et le boîtier magnétique, pour la formation d'un courant d'air de refroidissement.

16. Structure de circuit magnétique selon l'une quelconque des revendications précédentes, comprenant en outre un couvercle protecteur (120) disposé entièrement afin qu'il couvre le boîtier de circuit magnétique comprenant toutes les ouvertures (103, 105, 107, 108, 109), le couvercle protecteur étant formé d'un matériau non conducteur magnétique et étant placé à distance du boîtier de circuit magnétique pour former un courant d'air de refroidissement.

17. Structure de circuit magnétique selon la revendication 14, dans laquelle le boîtier de circuit magnétique comporte en outre :
deux tronçons de coquille d'extrémité, chacun des deux tronçons de coquille d'extrémité correspondant à un pôle respectif du champ magnétique,
les tronçons de coquille d'extrémité et les structures de circuit magnétique ayant une forme destinée à maintenir une distribution approximativement uniforme du flux magnétique dans la section de la structure de circuit magnétique,
chaque tronçon ayant plusieurs évidements (104), et
les évidements (104) comprenant un conducteur thermique très efficace.

18. Structure de circuit magnétique selon la revendication 17, dans laquelle les évidements (104) sont partiellement ouverts.

19. Structure de circuit magnétique selon la revendication 17, dans laquelle le boîtier de circuit magnétique comporte en outre :
plusieurs composants de circuit magnétique de distribution auxiliaire entre les pôles, dans laquelle les tronçons de boîtier sont combinés à l'un au moins des composants de circuit magnétique à distribution auxiliaire entre les pôles pour la formation de circuits magnétiques connectant les pôles de champ magnétique de la machine électrique en courant continu.

20. Structure de circuit magnétique selon la revendication 19, dans laquelle le composant de circuit magnétique de distribution auxiliaire entre les pôles est une sangle latérale,

21. Structure de circuit magnétique selon la revendication 19, dans laquelle le composant de circuit magnétique de distribution auxiliaire entre les pôles est une sangle axiale.

22. Structure de circuit magnétique selon la revendication 19, dans laquelle le composant de circuit magnétique de distribution auxiliaire entre les pôles est une sangle diagonale.

23. Structure de circuit magnétique selon la revendication 19, dans laquelle la structure est une structure de machine électrique linéaire, et dans laquelle la structure est un prolongement d'un dispositif rotatif multipolaire de grand diamètre.
